# EUROPEAN PATENT SPECIFICATION

(11) **EP 1 687 547 B1**
(45) Date of publication and mention of the grant of the patent: **30.01.2008**
(21) Application number: 03768119.4
(22) Date of filing: 24.11.2003
(51) Int. Cl.: F16D 65/14

(54) **IMMOBILISING DEVICE FOR A DISC BRAKE AND CORRESPONDING METHOD OF USE**
BREMSVORRICHTUNG FÜR EINE SCHEIBENBREMSE UND EIN VERFAHREN ZUR BENÜTZUNG
DISPOSITIF D'IMMOBILISATION POUR UN FREIN A DISQUE ET SA METHODE D'UTILISATION

(43) Date of publication of application: 09.08.2006
(73) Proprietor: Freni Brembo S.p.A., 24035 Curno (Bergamo) (IT)
(72) Inventor: CANTONI, Carlo, I-24020 Gorle (IT); CARRARA, Marco, I-20062 Cassano D'Adda (IT); CHARALAMBAKIS, Demos, I-24122 Bergamo (IT); PERRICONE, Guido, I-24126 Bergamo (IT)
(74) Representative: Crippa, Paolo Ernesto
(86) International application number: PCT/IT2003/000766
(87) International publication number: WO 2005/050050

(56) References cited:
- DE-A- 1 680 832
- US-A- 3 456 766
- US-A- 3 734 248
- US-A- 3 809 191
- PATENT ABSTRACTS OF JAPAN vol. 1997, no. 05, 30 May 1997 (1997-05-30) & JP 9 014308 A (ASMO CO LTD), 14 January 1997 (1997-01-14)
- PATENT ABSTRACTS OF JAPAN vol. 1999, no. 09, 30 July 1999 (1999-07-30) & JP 11 093991 A (TOKICO LTD), 6 April 1999 (1999-04-06)

## Description

This invention relates to an immobilising device for disk brakes and a corresponding method of use; in particular the invention relates to a device for providing a parking brake suitable for fitting to disc brakes.

As is known, thrust mechanisms which tighten the pads against the brake disc which has to be immobilised, to ensure that the pads are in a position pressed against the brake disc, are provided in devices for parking brakes.

These known mechanisms are complex and costly to construct; in particular thrust means or components which pass through the pressure chamber of the brake containing brake fluid under pressure are provided and interact with the thrust means for the braking systems, typically hydraulic pistons.

Brake callipers are of more complex construction and problems with the hydraulic seal of the brake pressure chambers arise and can cause hazardous leaking of brake fluid such as to compromise operation of the calliper. Such callipers are known from JP110093991.

The problem in this invention is that of constructing an immobilising device for disc brakes which overcomes the abovementioned disadvantages relating to the known art.

These disadvantages and limitations are overcome by an immobilising device according to claim 1 the method according to claim 13 and the brake calliper to claims 18 to 20.

Other embodiments of the immobilising device according to the invention are described in the subsequent claims.

Other advantages and characteristics of the present invention will become clear from the following detailed description which is given with reference to the appended drawings which are provided purely by way of non-limiting example and in which:

Figure 1 shows a perspective view of a brake calliper comprising an immobilising device according to the invention,

Figure 2 shows a view in cross-section of the brake calliper in Figure 1 along the plane II in Figure 1,

Figure 3 shows a view in cross-section of the calliper in Figure 1 along the plane III in Figure 1,

Figure 4 shows a magnified detail of the transmission coupling of the device according to the invention,

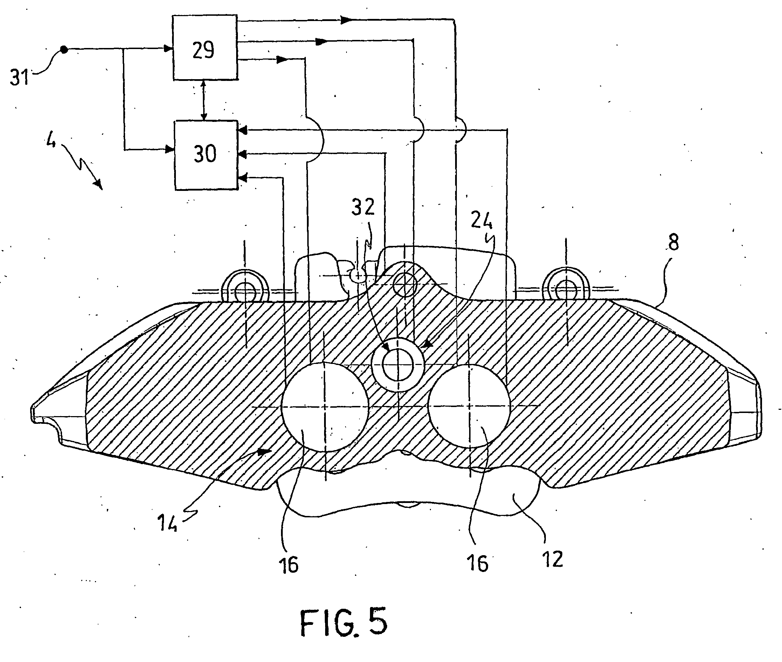

Figure 5 shows a cross-sectional view of the brake calliper in Figure 1 along the line V-V in Figure 3,

Figure 6 shows a view in cross-section of an immobilising device according to a further embodiment of the invention,

Figure 7 shows a perspective view of a brake calliper comprising an immobilising device according to a further embodiment of the invention,

Figure 8 shows a view in cross-section of the brake calliper in Figure 7 along the plane VIII in Figure 7.

Components or parts of components which are common to the embodiments described below will be indicated using the same reference numbers.

By the term radial direction is meant a direction substantially perpendicular to the axis of rotation of the brake disc which is associated with the disc brake calliper.

By the term axial direction is meant a direction substantially parallel to the axis of rotation of the associated brake disc.

By the term tangential direction is meant a direction substantially perpendicular to the axial direction and the radial direction, and parallel to the braking band of the associated brake disc.

The description below relates to disc brake callipers of both the fixed and floating type, comprising one piece or comprising two half callipers connected together.

With reference to the abovementioned figures, 4 generically indicates a disc brake calliper complex mounted so as to straddle a brake disc 6 which can rotate about an axis X-X, which defines the axial direction, and comprising a braking band 7 having two braking surfaces 7A, 7B perpendicular to the axial direction and capable of exerting a braking action.

Calliper complex 4 comprises a calliper body 8 comprising at least one central portion 9 straddling associated brake disc 6 and two side portions 10A, 10B located on sides axially opposite to brake disc 6 each respectively facing a corresponding braking surface 7A, 7B of braking band 7.

Calliper complex 4 also comprises at least one pad 12 which can interact with brake disc 6, and at least one hydraulic actuating device 14 comprising at least one piston 16 which is mounted so as to move within calliper body 8 in an axial direction and capable of exerting a thrust force on pad 12 against brake disc 6.

Calliper body 8 and the at least one piston 16 form a pressure chamber 20 capable of receiving a pressurised fluid to operate the at least one piston 16 and exert a braking force on brake disc 6.

Calliper complex 4 also comprises at least one immobilising device 24 capable of immobilising brake disc 6, in particular acting as a parking brake.

Immobilising device 24 comprises stop means 28 capable of providing an axial constraint for the said at least one pad 12 in a direction away from associated brake disc 6.

Preferably stop means 28 are located on the side portions 10A, 10B of calliper body 8 and are at least partly housed within calliper body 8 itself.

Advantageously stop means 28 lie outside said pressure chamber 20; in other words they are fluidly isolated from pressure chamber 20.

Advantageously stop means 28 and the at least one piston 16 are operatively independent of each other; in other words there are no mechanical or hydraulic connections between stop means 28 and the at least one piston 16.

Stop means 28 and the at least one piston 16 are positioned in such a way as to act on different portions of the said at least one pad 12 in other words; stop means 28 interact with a portion of pad 12 which is not acted on by the at least one piston 16.

Stop means 28 and hydraulic actuating means 14 are operatively connected to a command device 29 and a control device 30. The command device is capable of activating stop means 28 and the control device 30 is capable of coordinating the functioning of stop means 28 in relation to hydraulic actuating device 14. Said control device 30 can be remote with respect to the calliper body or connected thereto. Preferably command device 29 and control device 30 are electrically connected to a power terminal 31 capable of receiving electrical current, for example a direct current.

In accordance with one embodiment the stop means comprise a traveller 32 capable of acting on pad 12 and comprising a traveller body 36 and a traveller head 40.

Traveller body 36 is at least partly housed within calliper body 8, in particular in a seat 44 in side portions 10A, 10B of calliper body 8.

Preferably said seat 44 is a hole of cylindrical shape passing through a side portion of calliper body 8. On the inner surface seat 44 has a thread which extends along the axial direction.

Seat 44 is aligned substantially parallel to pistons 16 and is fluidly separated from pistons 16 and pressure chamber 20.

According to a further embodiment seat 44 comprises a bush 48 which has a thread 50 on its inner surface. Preferably bush 48 is inserted within seat 44 with an interference fit so as to render bush 48 of one piece with calliper body 8. In particular, in order to prevent relative rotational movement between bush 48 and calliper body 8, provision is made for example for a pin 52, located in for example a tangential direction, which passes through the side wall of bush 48 and part of the corresponding side portion of calliper body 8.

Traveller body 36 is substantially cylindrical with a circular cross-section and has a thread on its outer surface which can make a connection of the bolt/nut type with bush 48, in which bush 48 constitutes the nut and traveller 32 constitutes the bolt.

Preferably the thread of bush 48 and traveller 32 is of the irreversible type; in other words when a torque is applied to traveller 32 constituting the bolt it is possible to bring about relative axial translation movement between traveller 32 and bush 48, but it is not possible to effect relative translational movement by applying an axial force to traveller 32.

Preferably traveller body 36 is operatively connected at one extremity 56 facing the brake disc to traveller head 40 which is substantially mushroom-shaped and capable of abutting against a portion of pad 12.

Preferably traveller head 40 has a diameter which is larger than the diameter of traveller body 36 and has a flat portion 58 which can abut against a portion of pad 12.

At a second extremity 60 which is axially opposite said first extremity 56 traveller body 36 has a hole 64, preferably a blind hole, that is one which does not pass through first extremity 56.

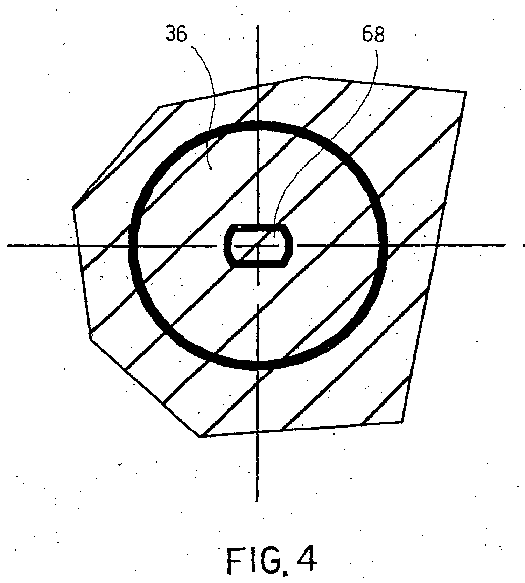

Said hole 64 is preferably not circular, for example it is of rectangular shape with two opposite curved sides, illustrated for example in Figure 4, so as to be able to effect an interlocking connection with a corresponding shaft.

Immobilising device 24 comprises an actuating shaft 68, at least partly within hole 64 in traveller body 36, and having a connecting extremity 72 and a transmission extremity 76.

Connecting extremity 72 is shaped to match hole 64 in traveller body 36 so as to form an interlocking connection with traveller body 36 and bind together actuating shaft 68 and traveller 32 in rotation.

Transmission extremity 76 is designed to receive the motion, directly or through suitable gears or transmissions from drive means 80.

Preferably drive means 80 are electric motors, for example direct current motors, capable of providing a sufficient torque to cause actuating shaft 68 to rotate to bring about translational movement of traveller 32.

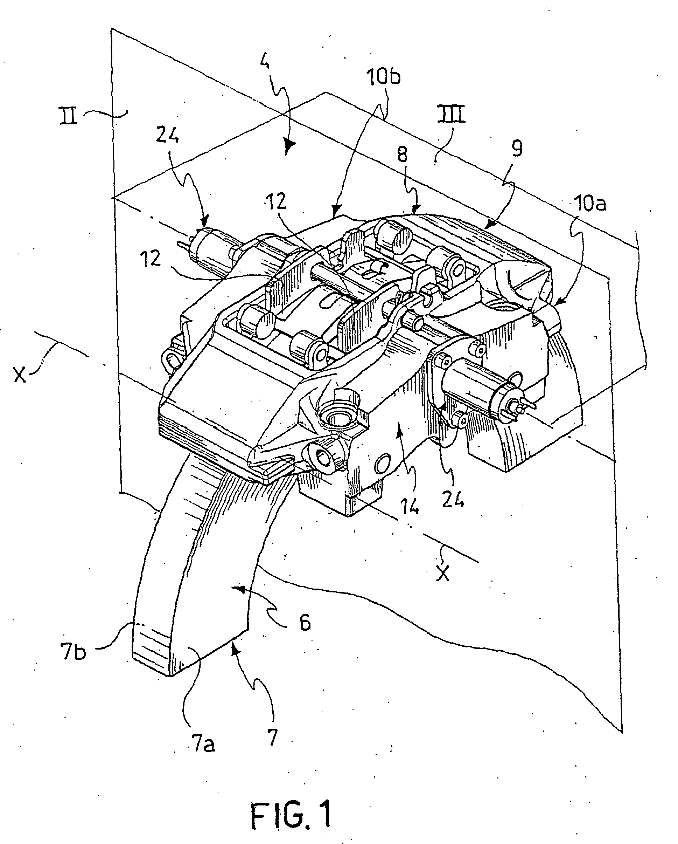

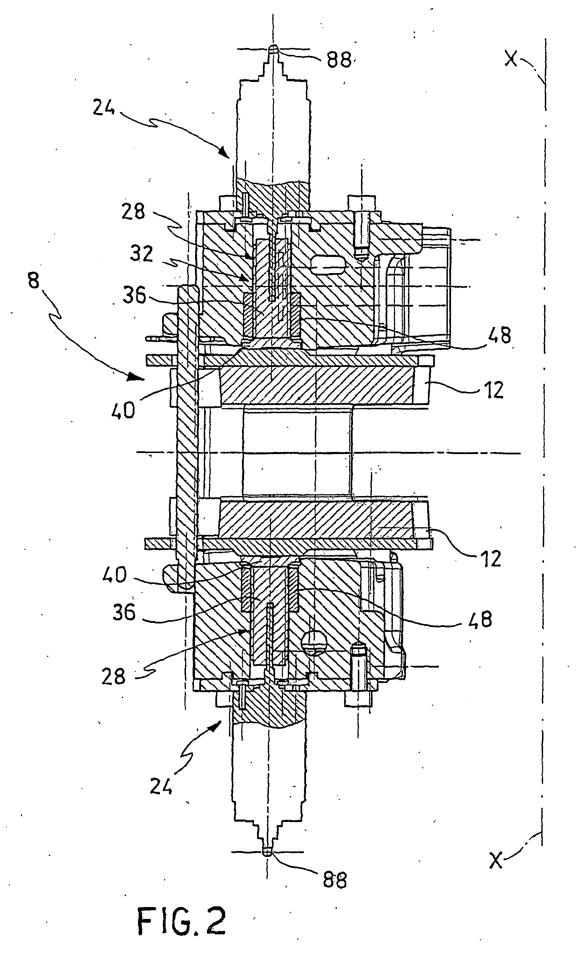

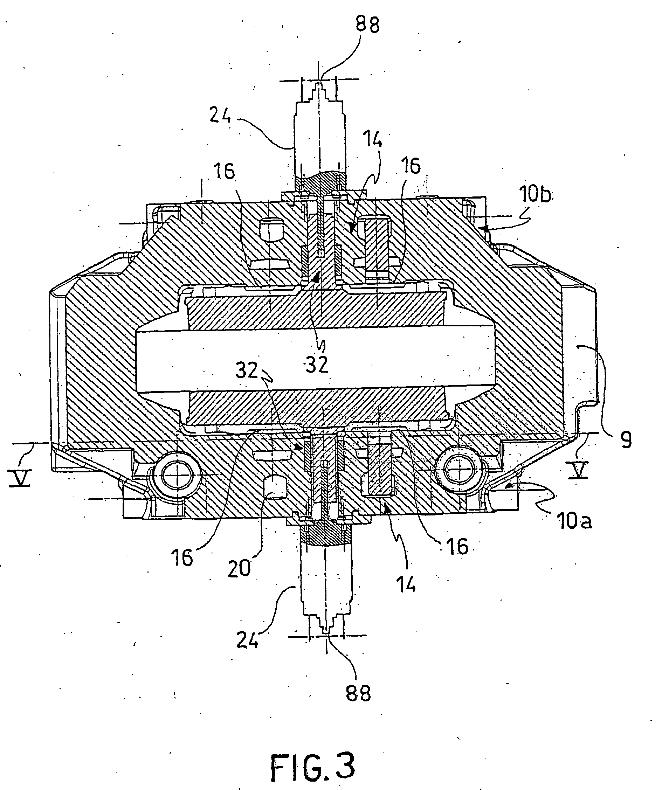

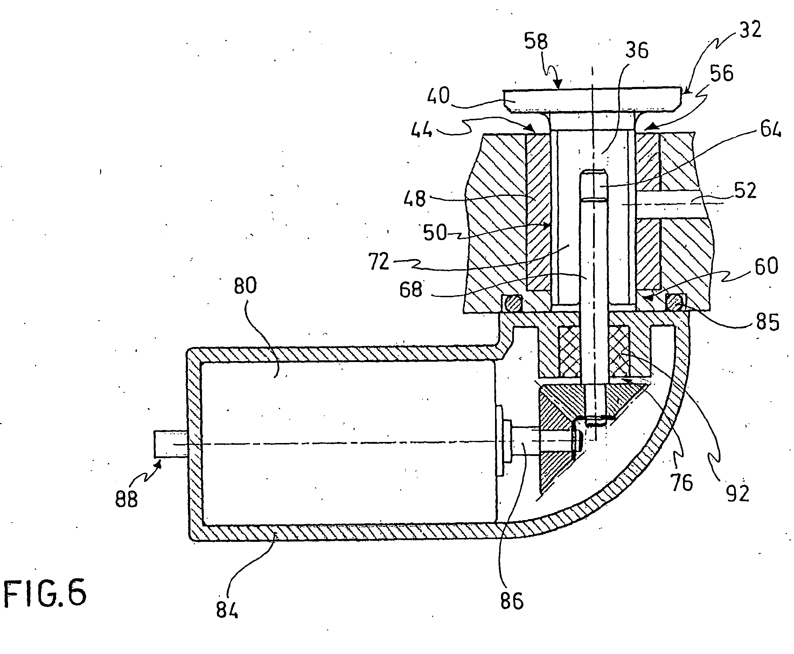

Preferably drive means 80 and the part of the immobilising device which is not contained within the calliper body are housed in an enclosure 84 which according to the preferred arrangement and the dimensions required may be positioned substantially axially, as illustrated for example in Figures 1-3 and 7-8, or substantially tangentially, as illustrated for example in Figure 6.

Enclosure 84 may be connected directly abutting against side portions 10A, 10B of calliper body 8, preferably with an intermediate sealing ring 85.

According to one possible embodiment, illustrated for example in Figure 6, the drive means comprise a drive shaft 86 having a free end 88 which is not engaged by visible transmission members, that is projecting from enclosure 84.

Said free extremity 88 has a cross-section, for example a hexagonal cross-section, which is capable of being caused to rotate manually through a tool such as a hexagon spanner.

Said enclosure 84 preferably comprises supports for the portion of actuating shaft 68 which projects from calliper body 8 away from brake disc 6; for example the support is provided by means of a bush bearing 92, which is substantially coaxial with the seat 44 of traveller body 36.

Preferably, in the case described as an example, the calliper body comprises at least two immobilising devices 24 located on opposite sides with respect to associated brake disc 6 and acting on pads 12 facing braking surfaces 7A, 7B which are axially opposite brake disc 6.

Preferably immobilising device 24 is positioned on the side portions 10A, 10B of calliper body 8 in such a way that traveller head 40 can act on pad 12 in a substantially central portion of the pad with respect to a tangential direction.

If the side portion of the calliper body has a single piston 16 located centrally with respect to the pad, immobilising device 24 is preferably located close to the piston, for example in line with the tangential direction and located radially outwards, that is in a direction away from the axis of rotation of the associated brake disc.

If the side portion of the calliper body has two pistons 16, immobilising device 24 is preferably positioned in a position lying tangentially between the two pistons.

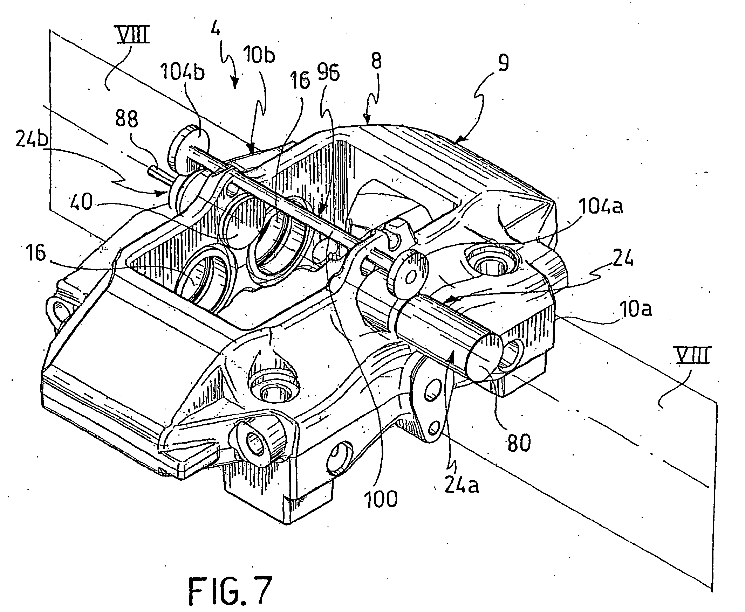

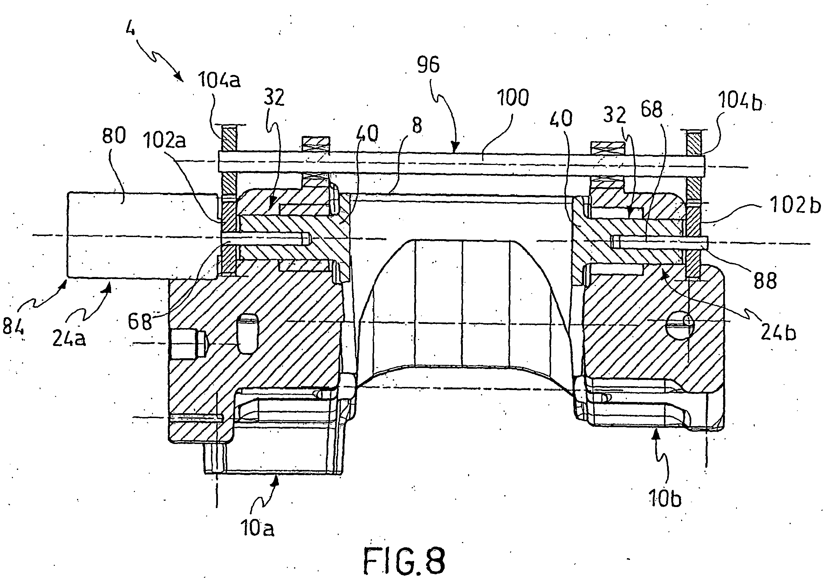

According to a further embodiment, illustrated for example in Figures 7 and 8, provision is made for an immobilising system comprising two immobilising devices 24A and 24B located on side portions 10A and 10B respectively, axially opposite each other with respect to associated brake disc 6, and operated by a single drive means 80 preferably located in the central portion 9 of one of the two side portions 10A, 10B of calliper body 8.

For example, said drive means 80 is located on side portion 10A and are operatively connected directly to actuating shaft 68 of immobilising device 24A located on the same side portion 10A. The immobilising devices each comprise a gear wheel 102A, 102B which is connected to each actuating shaft 68 so as to rotate as one piece.

In particular, gear wheel 102A is positioned in an axial direction on the portion of actuating shaft 68 of immobilising device 24A lying between enclosure 84 and calliper body 8; gear wheel 102B is positioned in an axial direction on the free extremity 88 of the actuating shaft 68 of immobilising-device 24B.

Furthermore, through for example a transmission device 96 which is positioned to straddle associated brake disc 6 and comprises a central shaft 10 and two lateral gears 104A, 104B capable of meshing with said gear wheels 102A, 102B, drive means 80 transmits rotatory motion to immobilising device 24 located on the opposite side portion 10B of calliper body 8.

The operation of the immobilising device according to the invention will now be described.

Braking for the purpose of parking using the immobilising device according to the invention is performed in at least two stages of braking.

During the first stage of parking braking the hydraulic circuit of brake calliper 4 actuates the at least one piston 16 in such a way as to bring pad 12 on which the former acts to abut against brake disc 6 and immobilise brake disc 6. In this first stage in which immobilising device 24 is inactive or in a resting condition, traveller body 36 is substantially withdrawn within seat 44 and the head of thrust member 40 is not in contact with pad 12.

Actuation of the hydraulic or servo circuit may occur in different ways depending upon the nature of the braking system to which the brake calliper is operatively connected.

In the second stage of parking braking, while the hydraulic circuit continues to press pads 12 against brake disc 6, drive means 80 are activated so as to cause actuating shaft 68 to rotate and move traveller 32 laterally until traveller head 40 abuts against pad 12. Electric motors, such as motors fed with direct current, may for example be used as drive means 80.

Once run ahead 40 abuts against pad 12, drive means 80 become deactivated, pressure is released from the hydraulic system and traveller head 40 remains abutted against pad 12 which is immobilised against brake disc 6. Drive means 80 may be deactivated for example by applying a control to the current taken up by the electric motor through control -device 30 so as to deactivate the drive means when this current reaches a predetermined value as a result of the resistance offered by the contact between traveller head 40 and pad 12. The irreversibility of the nut and bolt connection between traveller 32 and calliper body 8 prevents traveller head 40 from moving backwards.

Traveller 32 has the function of acting as a stop for pad 12 after the latter has been positioned and abutted against brake disc 6 by hydraulic piston 16.

The immobilisation of brake disc 6 through pads 12 takes place by taking advantage of the elasticity or elastic reaction force in calliper body 8. In other words, after hydraulic actuating device 14 has operated, calliper body 8 tends to expand elastically under the effect of the hydraulic thrust so that after traveller 32 has abutted against pad 12 and released pressure from hydraulic actuating device 14, the preloading or elastic load stored in the calliper body tightens pad 12 which has first been locked in position by traveller head 40 against brake disc 6.

Hydraulic actuating device 14 and immobilising device 24 are mechanically independent of each other while immobilising device 24 is functionally dependent on hydraulic actuating device 14 in that it is not capable of abutting and tightening pad 12 against the disc but only abutting traveller head 40 against the same in such a way as to prevent axial movement of pad 12 in a direction away from brake disc 6 when the force of hydraulic actuating device 14 is released. In other words, hydraulic actuating device 14 tightens pistons 16 against pads 12 in such a way as to preload and elastically deform calliper body 8; in particular calliper body 8 deforms elastically so that said side portions 10A, 10B tend to move axially away from the associated brake disc; in this way calliper body 8 is preloaded and stores elastic potential energy. Then traveller 32 abuts against pad 12 in such a way that when the hydraulic force of hydraulic actuating device 14 ceases the calliper body tends to give up the stored elastic potential energy, axially pressing said side portions 10A, 10B towards the associated brake disc. Through this axial thrust force traveller 32 is axially loaded under compression and presses pad 12 against brake disc 6, ensuring that the disc is immobilised. Traveller 32' acts from a compression-loaded strut in such a way as to hold the calliper body in an elastically deformed state even after hydraulic actuating device 14 has been deactivated.

Advantageously in the course of parking braking the control device carries out at least one second stage of braking in'association with at least one first stage of braking.

In other words, after having pressed pads 12 against brake disc 6 and abutted traveller 32 against the same, the control device again actuates hydraulic actuating device 14 in such a way as to further press pad 12 against brake disc 6; at the same time immobilising device 24 causes traveller 32 to advance further abutting against pad 12 in such a way as to ensure contact between pad 12 and traveller 32.

Preferably control device 30 coordinates a sequence of first and second stages of braking which overlap at least partly with each other so as to ensure correct immobilisation of brake disc 6 through successively abutting hydraulic actuating device 14 against pads 12 and consequent secure immobilisation of traveller 32.

In order to effect the operation of releasing the parking brake it is necessary during a first release stage to activate hydraulic actuating device 14 in such a way as to push pistons 16 against pads 12 and to relieve or preferably eliminate the axial load on traveller 32; in other words hydraulic actuating device 14 deforms calliper body 8 elastically in such a way as to relieve the compression load acting on traveller 32.

In a second release stage the control device activates drive means 80 which rotate traveller 32 in such a way as to move it away from pad 12; during this stage the control device for example controls the rate of rotation of drive means 80. According to further embodiments it is possible to move traveller 32 away from pad 12 by providing power to drive means 80 for a predetermined period or controlling the number of rotations performed by drive means 80, or by using a limit switch capable of deactivating drive means 80 when traveller head 40 has reached a predetermined position in its reverse travel.

Drive means 80 return traveller 32 towards calliper body 8 into a retracted position; control of the retraction of immobilising device 24 may take place for example by measuring the current taken up by drive means 80. The control device then deactivates drive means 80 and hydraulic actuating device 14 so as to discharge the hydraulic pressure in the hydraulic braking circuit.

In the event of malfunctioning, or jamming of traveller head 40 against pad 12 or damage to drive means 80, it is possible to act manually by rotating drive shaft 86 through a tool engaged on the opposite free extremity 88 of that shaft.

Control device 30 controls the operation of command device 29, preferably by acting on the current sent to the command device. Control device 30 controls command device 29 on the basis of a number of parameters which it receives from the stop means, such as for example the current taken up or the speed of rotation. On the basis of these parameters the control device acts on the command device which directly commands stop means 28. In the case of callipers for disc brakes in which the pads are pushed by electric motors, the control device also obtains electrical signals from those electric motors acting on the pads and controls the command device on the basis of those signals. The command device in turn commands both the stop means and the thrust electric motors for the pads.

As can be appreciated from what has been described, the immobilising device according to this invention makes it possible to overcome the disadvantages inherent in the parking brake devices according to the known art.

In particular the device described is simple and cheap to manufacture.

The device is free from the risks of hazardous leakage of brake fluid, as it is fluidly separate from the hydraulic circuit of the brake calliper with which it does not interfere.

Furthermore, if the immobilising device is damaged there is no risk of hazardous malfunction of the hydraulic servo braking system.

A further advantage lies in the fact that the device is of small dimensions and of low weight. In fact t he drive means are dimensioned to move the traveller from a resting position to a working position without exerting a thrust force on the pad.

Through alternating successive stages of braking the control device guarantees correct seating of the pad against the brake disc and secure immobilisation of the disc even after pressure has been removed from the hydraulic braking system.

In fact because of the fact that the piston and the traveller act on different portions of the pad small misalignments may arise due to elastic yielding of the calliper body after pressure has been removed from the hydraulic circuit of the calliper. This play will not ensure safe immobilisation of the disc through the traveller alone. These phenomena are avoided thanks to the immobilisation method described above imposed by the control device.

In order to satisfy contingent and specific requirements a person skilled in the art may make many modifications and variants to the immobilising device described above.

For example the pad actuating device may not be hydraulic, and electrical actuating means such as direct current electric motors capable of forcing the pads against the brake disc may be used.

These and other modifications and variants are all however included within the scope of the invention as defined by the following claims.

## Claims

1. Immobilising device (24) for a disc brake capable of effecting a parking braking action on a brake disc (6) which can rotate about an axis (X), the said disc brake comprising
- a calliper body (8),
- at least one pad (12) capable of interacting with the said brake disc (6), at least one hydraulic actuating device (14) comprising at least one piston (16) mounted so as to move within the calliper body (8) in an axial direction parallel to the said axis (X) and capable of exerting the thrust force through the said pad (12) against the said brake disc (6), the said immobilising device (24) comprising
- stop means (28) capable of applying an axial constraint on the said at least one pad (12) in a direction away from the associated brake disc (6),
**characterised in that**
the said stop means (28) are operatively separated from the at least one piston (16) and abut against a portion of the said pad (12) which is not acted on by the at least one piston (16), preventing axial displacement of the pad (12) in a direction away from the associated brake disc (6), the stop means comprising a traveller (32) acting from a compression - loaded strut in such a way as to hold the calliper body in an elastically deformed state even after hydraulic actuating device (14) has been deactivated, the traveller (32) being axially loaded under compression and pressing pad (12) against brake disc (6), ensuring that the disc is immobilised, the said hydraulic actuating device (14) and the said stop means (28) being operatively associated with a control device for simultaneous and/or sequential operation of the same.

2. Immobilising device (24) according to claim 1, in which the said stop means (28) lie outside a pressure chamber (20) of the calliper body (8) designed to receive pressurised fluid to actuate the at least one piston (16).

3. Immobilising device (24) according to claims 1 or 2, in which the said stop means (28) comprise a traveller (32) acting directly on the at least one pad (12) and comprising a traveller body (36) at least partly housed within the calliper body (8) and a traveller head (40) capable of abutting against the at least one pad (12).

4. Immobilising means (24) according to claim 3, in which the said traveller head (40) is substantially mushroom-shaped.

5. Immobilising device (24) according to claims 3 or 4, in which the said traveller body (36) is at least partly connected to the calliper body (8) in accordance with a connection of the nut and bolt type.

6. Immobilising device (24) according to any one of the preceding claims, in which the said traveller body (36) is at least partly connected to the calliper body (8) through a bush (48) securely fixed to the calliper body (8) and connected to the traveller body (36) through a connection of the nut and bolt type.

7. Immobilising device (24) according to claims 5 or 6, in which the said nut and bolt connection is of the irreversible type.

8. Immobilising device (24) according to any one of claims 3 to 7, in which the said traveller body (36) is connected to an actuating shaft (68) for the traveller (32) in such a way that the traveller body (36) and the said actuating shaft (68) rotate together as one piece.

9. Immobilising device (24) according to claim 8, in which the traveller body (36) and the actuating shaft (68) are firmly connected in rotation through an interlocking connection.

10. Immobilising device (24) according to claims 8 or 9, in which the said actuating shaft (68) is operatively associated with drive means (80) capable of rotating the said actuating shaft (68).

11. Immobilising device (24) according to any one of the preceding claims, in which the said drive means (80) are located substantially parallel to the said drive shaft (68).

12. Immobilising device (24) according to any one of claims from 1 to 10, in which the said drive means (80) are located along an angled direction with respect to the said actuating shaft (68).

13. Method for the parking braking of a disc brake through an immobilising device (24) according to any one of claims from 1 to 12, comprising
a first braking stage in which the said at least one piston (16) pushes the said at least one pad (12) to abut against the brake disc (6) in such a way as to immobilise the brake disc (6), the hydraulic actuating device 14 tightening pistons 16 against pads 12 in such a way as to preload and elastically deform calliper body 8, calliper body 8 being preloaded and storing elastic potential energy, and
a second braking stage in which the said stop means (28) abut against a portion of the said at least one pad (12) not acted on by the said piston (26) preventing axial displacement of the pad (12) in a direction away from the associated brake disc (6), in such a way that when the hydraulic force of hydraulic actuating device (14) ceases the calliper body tends to give up the stored elastic potential energy, axially pressing said side portions (10A, 10B) towards the associated brake disc, ensuring that the disc is immobilised.

14. Method for the parking braking of a disc brake according to claim 13, in which the said first and second braking stages overlap at least partly in time.

15. Method of parking braking a disc brake according to claim 13 or 14, in which a sequence of first braking stages is provided during operation.

16. Method for parking braking a disc brake according to any one of claims from 13 to 15, comprising
a first release stage in which the said at least one piston (16) presses the said at least one pad (12) against the brake disc (6) in such a way as to relieve the axial load on the stop means (28), and
a second release stage in which the said drive means (80) cause the said stop means (28) to move back in a direction away from the brake disc (6).

17. Method of parking braking a disc brake according to claim 16, comprising a third release stage in which hydraulic pressure is discharged from the said hydraulic actuating device (14).

18. Brake calliper comprising at least one immobilising device (24) according to any one of claims from 1 to 12.

19. Brake calliper (4) of the fixed type, comprising at least one pair of immobilising devices (24) according to any of claims from 1 to 12, the said immobilising devices (24) being located on opposite sides with respect to the brake disc (6) in such a way as to act upon pads (12) located on opposite sides of the said brake disc (6).

20. Brake calliper (4) of the floating type, comprising at least one immobilising device (24) according to claims 1 to 12, located on one side of the calliper body (8) comprising at least one piston (16).

## Patentansprüche

1. Wegfahrsperre (24) für eine Scheibenbremse, die in der Lage ist, eine Feststellbremswirkung auf eine Scheibenbremse (6) auszuüben, die sich um eine Achse (X) drehen kann, wobei die genannte Scheibenbremse folgendes umfasst:
- einen Bremssattelkörper (8),
- zumindest einen Belag (12), der mit der genannten Bremsscheibe (6) zusammenwirken kann, zumindest eine hydraulische Betätigungsvorrichtung (14), die zumindest einen Kolben (16) umfasst, der so montiert ist, dass er sich innerhalb des Bremssattelkörpers (8) in einer Axialrichtung parallel zu der genannten Achse (X) bewegt und die Druckkraft über den genannten Belag (12) auf die genannte Bremsscheibe (6) ausüben kann,
wobei die genannte Wegfahrsperre (24) folgendes umfasst
- Arretiermittel (28), die eine axiale Hemmung auf den genannten zumindest einen Belag (12) in einer Richtung ausüben können, die von der dazugehörigen Bremsscheibe (6) fort weist,
**dadurch gekennzeichnet,**
**dass** die genannten Arretiermittel (28) funktionsmäßig von dem zumindest einen Kolben (16) getrennt sind und an einem Teilstück des genannten Belags (12) anliegen, der nicht von dem zumindest einen Kolben (16) beaufschlagt wird, was eine axiale Verlagerung des Belags (12) in eine von der zugehörigen Bremsscheibe (6) fortweisenden Richtung verhindert, wobei die Arretiermittel einen Läufer (32) umfassen, der von einer druckbeaufschlagten Abstützung aus wirkt, dergestalt, dass er den Bremssattelkörper in einem elastisch verformten Zustand hält, selbst nachdem die hydraulische Betätigungsvorrichtung (14) deaktiviert wurde, wobei der Läufer (32) axial druckbelastet ist und den Belag (12) gegen die Bremsscheibe (6) presst, wodurch sichergestellt wird, dass die Scheibe blockiert ist, wobei die genannte Betätigungsvorrichtung (14) und die genannten Arretiermittel (28) mit einer Steuereinrichtung zum gleichzeitigen und/oder aufeinander folgenden Betrieb derselben wirkverbunden sind.

2. Wegfahrsperre (24) nach Anspruch 1,
bei der die genannten Arretiermittel (28) außerhalb einer Druckkammer (20) des Bremssattelkörpers (8) liegen, die zur Aufnahme von unter Druck stehendem Fluid dient, um den zumindest einen Kolben (16) zu betätigen.

3. Wegfahrsperre (24) nach den Ansprüchen 1 oder 2,
bei der die genannten Arretiermittel (28) einen Läufer (32) umfassen, der direkt auf den zumindest einen Belag (12) wirkt und einen Läuferkörper (36) umfasst, der zumindest teilweise im Bremssattelkörper (8) aufgenommen ist, sowie einen Läuferkopf (40), der an dem zumindest einen Belag (12) anliegen kann.

4. Wegfahrsperre (24) nach Anspruch 3,
bei der der genannte Läuferkopf (40) im wesentlichen pilzförmig ist.

5. Wegfahrsperre (24) nach den Ansprüchen 3 oder 4,
bei der der genannte Läuferkörper (36) zumindest teilweise mit dem Bremssattelkörper (8) in Form einer Verbindung des Schrauben-Muttern-Typs verbunden ist.

6. Wegfahrsperre (24) nach einem der vorhergehenden Ansprüche,
bei der der genannte Läuferkörper (36) zumindest teilweise mit dem Bremssattelkörper (8) durch eine Hülse (48) verbunden ist, die sicher am Bremssattelkörper (8) montiert ist und am Läuferkörper (36) durch eine Verbindung des Schrauben-Muttern-Typs befestigt ist.

7. Wegfahrsperre (24) nach den Ansprüchen 5 oder 6,
bei der die genannte Schrauben-Muttern-Verbindung selbstsperrend ist.

8. Wegfahrsperre (24) nach einem der Ansprüche 3 bis 7,
bei der der genannte Läuferkörper (36) mit einer Betätigungswelle (68) für den Läufer (32) verbunden ist, dergestalt, dass sich der Läuferkörper (36) und die genannte Betätigungswelle (68) gemeinsam als ein Teil drehen.

9. Wegfahrsperre (24) nach Anspruch 8,
bei der der genannte Läuferkörper (36) und die Betätigungswelle (68) durch eine ineinander greifende Verbindung drehfest miteinander verbunden sind.

10. Wegfahrsperre (24) nach den Ansprüchen 8 oder 9,
bei der die genannte Betätigungswelle (68) wirksam mit Antriebsmitteln (80) assoziiert ist, die die genannte Betätigungswelle (68) in Drehung versetzen können.

11. Wegfahrsperre (24) nach einem der vorhergehenden Ansprüche,
bei der die genannten Antriebsmittel (80) im wesentlichen parallel zu der genannten Antriebswelle (68) angeordnet sind.

12. Wegfahrsperre (24) nach einem der Ansprüche 1 bis 10,
bei der die genannten Antriebsmittel (80) in einem Winkel zu der genannten Betätigungswelle (68) angeordnet sind.

13. Verfahren zur Bremsenfeststellung einer Scheibenbremse durch eine Wegfahrsperre (24) nach einem der Ansprüche 1 bis 12, umfassend
eine erste Bremsstufe, bei der der genannte eine Kolben (16) den genannten zumindest einen Belag (12) zur Anlage gegen die Bremsscheibe (6) drückt, dergestalt, dass die Bremsscheibe (6) festgesetzt wird, wobei die hydraulische Betätigungsvorrichtung (14) die Kolben (16) derart stark gegen die Beläge (12) presst, dass der Bremssattelkörper (8) vorgespannt und elastisch verformt wird,
wobei der Bremssattelkörper (8) vorgespannt wird und elastische potentielle Energie speichert; und
eine zweite Bremsstufe, bei der die genannten Arretiermittel (28) an einem Teilstück des genannten zumindest einen Belags (12) anliegen, der nicht von dem genannten Kolben (16) beaufschlagt wird, was eine axiale Verlagerung des Belags (12) in eine von der zugehörigen Bremsscheibe (6) fort weisenden Richtung verhindert, dergestalt, dass der Bremssattelkörper bei Wegfall der Hydraulikkraft der hydraulischen Betätigungsvorrichtung (14) dazu neigt, die gespeicherte elastische potentielle Energie abzugeben, wobei die genannten Seitenabschnitte (10A, 10B) axial in Richtung zu der zugehörigen Bremsscheibe gepresst werden, wodurch sichergestellt ist, dass die Scheibe festgesetzt ist.

14. Verfahren zur Bremsenfeststellung einer Scheibenbremse nach Anspruch 13,
bei dem die genannten Bremsstufen einander zumindest teilweise zeitlich überlappen.

15. Verfahren zur Bremsenfeststellung einer Scheibenbremse nach den Ansprüchen 13 oder 14,
bei dem eine Folge von ersten Bremsstufen während des Betriebs vorgesehen ist.

16. Verfahren zur Bremsenfeststellung einer Scheibenbremse nach einem der Ansprüche 13 bis 15, umfassend
eine erste Freigabestufe, bei der der genannte zumindest eine Kolben (16) den genannten zumindest einen Belag (12) so gegen die Bremsscheibe (6) drückt, dass die auf die Arretiermittel (28) wirkende axiale Last abgebaut wird, und
eine zweite Freigabestufe, bei der die genannten Antriebsmittel (80) ein Zurückfahren der Arretiermittel (28) in eine von der Bremsscheibe (6) fort weisenden Richtung bewirken.

17. Verfahren zur Bremsenfeststellung einer Scheibenbremse nach Anspruch 16,
umfassend eine dritte Freigabestufe, bei der der hydraulische Druck von der genannten hydraulischen Betätigungsvorrichtung (14) abgelassen wird.

18. Bremssattel, umfassend zumindest eine Wegfahrsperre (24) nach einem der Ansprüche 1 bis 12.

19. Bremssattel (4) des Festsatteltyps, umfassend zumindest ein Paar von Wegfahrsperren (24) nach einem der Ansprüche 1 bis 12, wobei die genannten Wegfahrsperren (24) auf entgegen gesetzten Seiten der Bremsscheibe (6) vorgesehen sind, dergestalt, dass sie auf Beläge (12) wirken, die auf entgegen gesetzten Seiten der genannten Bremsscheibe (6) angeordnet sind.

20. Bremssattel (4) des Faustsatteltyps, umfassend zumindest eine Wegfahrsperre (24) nach einem der Ansprüche 1 bis 12, die auf einer Seite des Bremssattelkörpers (8) vorgesehen ist, der zumindest einen Kolben (16) umfasst.

## Revendications

1. Dispositif d'immobilisation (24) pour un frein à disque capable d'effectuer une action de freinage de stationnement sur un disque de frein (6) qui peut pivoter sur un axe (X), ledit frein à disque comprenant :
- un corps d'étrier de frein (8),
- au moins un patin (12) capable d'interagir avec ledit disque de frein (6), au moins un dispositif d'actionnement hydraulique (14) comprenant au moins un piston (16) monté de manière à se déplacer au sein du corps d'étrier de frein (8) dans une direction axiale parallèle audit axe (X) et capable d'exercer la force de poussée au travers dudit patin (12) contre ledit disque de frein (6),
ledit dispositif d'immobilisation (24) comprenant :
- des moyens d'arrêt (28) capables d'appliquer une contrainte axiale sur ledit au moins un patin (12) dans une direction opposée au disque de frein (6) associé,
**caractérisé en ce que**
lesdits moyens d'arrêt (28) sont fonctionnellement séparés dudit au moins un piston (16) et viennent en butée contre une partie dudit patin (12) sur laquelle n'agit pas ledit au moins un piston (12), ce qui empêche le déplacement axial du patin (12) dans une direction opposée au disque de frein (6) associé, les moyens d'arrêt comprenant un coulisseau (32) agissant sous l'effet d'une plaque d'appui chargée en compression de manière à maintenir le corps d'étrier de frein (8) dans une état élastiquement déformé même après que le dispositif d'actionnement hydraulique (14) a été désactivé, le coulisseau (32) étant axialement chargé sous compression et pressant le patin (12) contre le disque de frein (6), ce qui assure que le disque est immobilisé, ledit dispositif d'actionnement hydraulique (14) et lesdits moyens d'arrêt (28) étant associés fonctionnellement avec un dispositif de commande pour leur fonctionnement simultané et/ou séquentiel.

2. Dispositif d'immobilisation (24) selon la revendication 1, dans lequel lesdits moyens d'arrêt (28) sont situés à l'extérieur d'une chambre de pression (20) du corps d'étrier de frein (8) conçue pour recevoir un fluide sous pression pour actionner ledit au moins un piston (16).

3. Dispositif d'immobilisation (24) selon les revendications 1 ou 2, dans lequel lesdits moyens d'arrêt (28) comprennent un coulisseau (32) agissant directement sur ledit au moins un patin (12) et comprenant un corps de coulisseau (36) au moins partiellement logé au sein du corps d'étrier de frein (8) et une tête de coulisseau (40) capable de venir en butée contre ledit au moins un patin (12).

4. Dispositif d'immobilisation (24) selon la revendication 3, dans lequel ladite tête de coulisseau (40) est sensiblement en forme de champignon.

5. Dispositif d'immobilisation (24) selon les revendications 3 ou 4, dans lequel ledit corps de coulisseau (36) est au moins partiellement relié au corps d'étrier de frein (8) selon une liaison du type vis-écrou.

6. Dispositif d'immobilisation (24) selon l'une quelconque des revendications précédentes, dans lequel ledit corps de coulisseau (36) est au moins partiellement relié au corps d'étrier de frein (8) au moyen d'une douille (48) fixée solidement au corps d'étrier de frein (8) et reliée au corps de coulisseau (36) au moyen d'une liaison du type vis-écrou.

7. Dispositif d'immobilisation (24) selon l'une des revendications 5 ou 6, dans lequel ladite liaison vis-écrou est du type irréversible.

8. Dispositif d'immobilisation (24) selon l'une quelconque des revendications 3 à 7, dans lequel ledit corps de coulisseau (36) est relié à un arbre d'actionnement (68) pour le coulisseau (32) de manière que le corps de coulisseau (36) et l'arbre d'actionnement (68) tournent ensemble comme une seule pièce.

9. Dispositif d'immobilisation (24) selon la revendication 8, dans lequel ledit corps de coulisseau (36) et l'arbre d'actionnement (68) sont reliés fermement en rotation par une liaison verrouillée.

10. Dispositif d'immobilisation (24) selon les revendications 8 ou 9, dans lequel l'arbre d'actionnement (68) est fonctionnellement associé avec des moyens d'entraînement (80) capable d'entraîner en rotation ledit arbre d'actionnement (68).

11. Dispositif d'immobilisation (24) selon l'une quelconque des revendications précédentes dans lequel lesdits moyens d'entraînement (80) sont disposés sensiblement parallèles audit arbre d'actionnement (68).

12. Dispositif d'immobilisation (24) selon l'une quelconque des revendications 1 à 10, dans lequel lesdits moyens d'entraînement (80) sont disposés selon une direction faisant un angle par rapport audit arbre d'actionnement (68).

13. Procédé pour le freinage de stationnement d'un frein à disque au moyen d'un dispositif d'immobilisation (24) selon l'une quelconque des revendications 1 à 12, comprenant :
une première étape de freinage dans laquelle ledit au moins un patin (12) pousse ledit au moins un patin (12) pour venir en butée contre le disque de frein (6) d'une manière à immobiliser le disque de frein (6), le dispositif d'actionnement hydraulique (14) raidissant des pistons (16) contre des patins (12) d'une manière telle qu'ils préchargent et déforment élastiquement le corps d'étrier de frein (8), le corps d'étrier de frein (8) étant préchargé et accumulant une énergie potentielle élastique, et
une seconde étape de freinage dans laquelle lesdits moyens d'arrêt (28) viennent en butée contre une partie dudit au moins un patin (12) sur laquelle n'agit pas ledit au moins un piston (26), ce qui empêche un déplacement axial du patin (12) dans une direction opposée au disque de frein (6) associé, d'une manière telle que quand la force hydraulique du dispositif d'actionnement hydraulique (14) cesse, le corps d'étrier de frein (8) tend à relâcher l'énergie potentielle élastique accumulée, appuyant axialement sur lesdites parties latérales (10A, 10B) vers le disque de frein (6) associé, ce qui assure l'immobilisation du disque.

14. Procédé pour le freinage de stationnement d'un disque de frein (6) selon la revendication 13, dans lequel lesdites première et seconde étapes de freinage se chevauchent au moins partiellement dans le temps.

15. Procédé pour le freinage de stationnement d'un disque de frein (6) selon l'une des revendications 13 ou 14, dans lequel on prévoit en fonctionnement une séquence de premières étapes de freinage.

16. Procédé pour le freinage de stationnement d'un disque de frein (6) selon l'une quelconque des revendications 13 à 15, comprenant :
une première étape de relâchement dans laquelle ledit au moins un piston (16) appuie sur ledit au moins un patin (12) contre le disque de frein (6) de manière à soulager la charge axiale sur les moyens d'arrêt (28), et
une seconde étape de relâchement dans laquelle lesdits moyens d'entraînement (80) font reculer lesdits moyens d'arrêt (28) dans une direction opposée au disque de frein (6).

17. Procédé pour le freinage de stationnement d'un disque de frein (6) selon la revendication 16, comprenant une troisième étape de relâchement dans laquelle la pression hydraulique est évacuée dudit dispositif d'actionnement hydraulique (14).

18. Etrier de frein comprenant au moins un dispositif d'immobilisation (24) selon l'une quelconque des revendications 1 à 12.

19. Etrier de frein de type fixe, comprenant au moins une paire de dispositifs d'immobilisation (24) selon l'une quelconque des revendications 1 à 12, lesdits dispositifs d'immobilisation (24) étant disposés sur des côtés opposés par rapport au disque de frein (6) de manière à agir sur des patins (12) situés sur des côtés opposés dudit disque de frein (6).

20. Etrier de frein de type flottant, comprenant au moins un dispositif d'immobilisation (24) selon l'une des revendications 1 à 12, disposé sur un côté du corps d'étrier de frein (8) comprenant au moins un piston (16).
